# FASCICULE DE BREVET EUROPEEN

(11) **EP 3 289 384 B1**
(45) Date de publication et mention de la délivrance du brevet: **05.08.2020**
(21) Numéro de dépôt: 16721685.2
(22) Date de dépôt: 20.04.2016
(51) Int. Cl.: G01S 17/66, F41H 13/00, F41G 5/08, G01S 3/786

(54) **SYSTEME OPTIQUE ET PROCEDE DE POINTAGE LASER A TRAVERS L'ATMOSPHERE**
OPTISCHES SYSTEM UND VERFAHREN ZUM AUSRICHTEN EINES LASERS DURCH DIE ATMOSPHÄRE
OPTICAL SYSTEM AND METHOD FOR POINTING A LASER THROUGH THE ATMOSPHERE

(30) Priorité: 30.04.2015 FR 1500914
(43) Date de publication de la demande: 07.03.2018
(73) Titulaire: Thales, 92400 Courbevoie (FR)
(72) Inventeur: CAORS, Antonin, 78283 Guyancourt Cedex (FR); BUSTIN, Bruno, 78283 Guyancourt Cedex (FR)
(74) Mandataire: Henriot, Marie-Pierre
(86) Numéro de dépôt international: PCT/EP2016/058772
(87) Numéro de publication internationale: WO 2016/173905

(56) Documents cités:
- EP-A1- 2 283 548
- WO-A1-2009/077360
- WO-A1-2009/077361
- US-A1- 2011 103 410
- US-A1- 2011 253 910

## Description

Le domaine de l'invention est celui des systèmes de pointage laser d'une cible, équipés de dispositifs d'imagerie active permettant de repérer des cibles dans un environnement donné, la cible pouvant être aérienne ou terrestre et d'asservir les systèmes de pointage laser.

De manière générale, l'imagerie active utilise sa propre source de lumière, classiquement un laser à impulsion. Grâce à la directivité de l'émission et les énergies mises en jeu on recueille un signal à grande distance même au travers d'un milieu diffusant. Ces caractéristiques ont en particulier conféré à cette technique un poids important pour la sécurité et la défense. Les photons émis par un laser et réfléchis par différents objets d'une scène sont collectés par un récepteur-imageur. L'utilisation conjointe d'un laser impulsionnel et d'une porte temporelle en réception permet la sélection d'une tranche d'espace contenant les cibles d'intérêts.

Est concerné notamment le domaine de pointage de systèmes à énergie laser dirigée requérant la correction des effets liés aux turbulences atmosphériques sur la propagation libre de faisceaux laser ; ces turbulences perturbent le système et dégradent les performances de précision et de stabilité de pointage. En outre la poursuite d'une cible mobile et la correction simultanée des perturbations optiques introduites par l'atmosphère nécessitent des bandes passantes d'asservissement importantes (de l'ordre d'1 à 2 kHz) pour corriger des perturbations de durée caractéristique de l'ordre de 10 ms et nécessitent de couvrir un domaine spatial le plus vaste possible (de l'ordre d'un demi-espace), tout en satisfaisant aux contraintes opérationnelles telles que robustesse, autonomie, mobilité, temps de déploiement, ..... Pour des applications requérant de très hautes performances (précision de l'ordre du micro radian, portée de plusieurs kilomètres), cette correction implique d'avoir accès à une mesure de la position de la cible avec une haute résolution angulaire à une fréquence suffisante, afin d'assurer la compensation au premier ordre de la déformation de la surface d'onde (phénomène de gigue). Par ailleurs, le système d'illumination doit opérer à une longueur d'onde proche mais différente de celle du pointage laser.

On peut citer comme autres exemples d'application, la mise en œuvre de communications optiques en espace libre entre une station sol fixe et un objet volant en espace aérien ou spatial, ou encore un procédé de soudure à grande distance, cas fréquemment rencontré sur les chantiers navals pour l'assemblage de grandes pièces et pour lequel les solutions actuelles imposent l'utilisation de postes de soudure au contact ou au voisinage proche des pièces à assembler.

Il existe actuellement une solution mise en œuvre dans les télescopes pour corriger les effets liés à ces perturbations atmosphériques. Le cas des instruments astronomiques présentent cependant des caractéristiques opérationnelles différentes. En effet, l'objet pointé est généralement ponctuel et fixe (ou très lentement mobile), ce qui n'est généralement pas le cas des cibles envisagées avec les systèmes de pointage laser. En outre un fonctionnement de jour comme de nuit est requis.

Le document US 2011/253910 dévoile un système optique de pointage laser d'une cible à travers l'atmosphère. L'acquisition et la recherche de la cible sont réalisées par des unités séparées.

En conséquence, il demeure à ce jour un besoin pour un système de pointage laser d'une cible donnant simultanément satisfaction à l'ensemble des exigences précitées, en termes de précision, de portée et de stabilité de pointage, de champ adressable, d'encombrement et de coût du système.

La solution proposée est basée sur une architecture opto-mécanique dans laquelle le pointage est divisé en deux étages, l'un dit grossier et l'autre dit fin, le premier assurant la couverture angulaire et le second apportant la précision ultime. De plus, le pointage grossier permet de mettre en œuvre une imagerie active qui permet le fonctionnement du pointage fin.

Plus précisément l'invention a pour objet un système optique de pointage laser d'une cible à travers l'atmosphère, qui comporte quatre voies optiques :
- une voie d'imagerie passive avec une caméra auxiliaire apte à obtenir des images de la cible, et un dispositif de contrôle de pointage grossier relié à cette caméra,
- une voie d'illumination avec une source d'illumination impulsionnelle et des moyens de synchronisation temporelle,
   et en ce que les voies d'imagerie passive et d'illumination comportent un premier dispositif optique commun de pointage grossier, relié au dispositif de contrôle de pointage grossier,
- une voie d'effecteur avec une source laser de puissance,
- une voie d'imagerie active avec :
   ∘ une caméra haute cadence synchronisée avec la source d'illumination impulsionnelle par les moyens de synchronisation temporelle,
   ∘ des moyens d'harmonisation de la caméra haute cadence avec la source laser de puissance, et
   ∘ un dispositif de contrôle de pointage fin relié à cette caméra.
   Il est principalement caractérisé en ce que les voies d'imagerie active et d'effecteur forment une paire et comportent
   - un second dispositif optique commun de pointage grossier relié au dispositif de contrôle de pointage grossier ou par le dispositif de contrôle de pointage fin selon la phase opérationnelle dans la séquence de tir,
   - un dispositif optique commun de pointage fin commandé par le dispositif de contrôle de pointage fin,
   - un dispositif optique convergent muni de moyens de mise au point,
   et en ce que le dispositif de contrôle de pointage grossier est relié au dispositif de contrôle de pointage fin.

Le dispositif optique convergent est de préférence situé entre le dispositif optique commun de pointage fin et le second dispositif optique de pointage grossier. Selon une caractéristique de l'invention, le système optique de pointage comprend un premier dispositif de superposition des voies d'imagerie passive et d'illumination situés entre le premier dispositif optique de pointage grossier et la source laser d'illumination et un second dispositif de superposition des voies d'imagerie active et de puissance situés entre le dispositif de pointage fin et la source laser de puissance.

Le système optique de pointage comprend éventuellement d'autres paires de voies d'imagerie active et d'effecteur disposées en parallèle ; le dispositif de contrôle du pointage fin de chaque voie d'imagerie active est relié au dispositif de contrôle du pointage grossier de la voie d'imagerie passive.

Selon une autre caractéristique de l'invention, les paires de voies d'imagerie active et d'effecteur sont montées sur un bâti selon une configuration prédéterminée de préférence rectiligne, et le bâti est lui-même monté sur un dispositif de rotation du bâti.

L'architecture du système selon l'invention permet la mise en œuvre d'autant de lasers de puissance que nécessaire pour obtenir l'effet désiré.

Elle permet également de mettre en œuvre des éléments de petites dimensions, plus faciles à standardiser donc à obtenir, ce qui réduit le coût de la solution et permet une grande modularité du système, donc une intégration et une maintenance facilitées.

L'invention a aussi pour objet un procédé de poursuite d'une cible à travers l'atmosphère au moyen d'un système de pointage tel que décrit précédemment, caractérisé en ce qu'il comporte les étapes suivantes :
- orienter le premier et chaque second dispositif de pointage grossier dans une direction prédéterminée ;
- lorsqu'une cible est présente dans le champ de la caméra auxiliaire, accrocher et stabiliser une boucle de poursuite grossière ;
- une cible ayant été trouvée et poursuivie, le contrôle du premier dispositif de pointage grossier et de chaque second dispositif de pointage grossier est confié au dispositif de contrôle de pointage grossier ;
- allumer la source laser d'illumination ;
- lorsque l'illumination est allumée, chaque caméra haute cadence fournit un flux vidéo au dispositif de contrôle de pointage fin associé afin d'accrocher et stabiliser chaque boucle de poursuite fine ;
- chaque second dispositif de pointage grossier est alors piloté par le dispositif de contrôle de pointage fin de sa paire, qui dès lors pilote à la fois le dispositif de pointage grossier et le dispositif de pointage fin,
- lorsque chaque second dispositif de pointage grossier est asservi par le dispositif de contrôle de pointage fin de la paire considérée, le dispositif de contrôle de pointage grossier ne contrôle plus que le premier dispositif de pointage grossier,
- sur commande de tir du système, allumer les lasers de puissance et poursuivre la cible grâce à l'imagerie active fournie par les caméras haute cadence et par les dispositifs de pointage fin et grossier afin que chaque source laser de puissance soit pointée.

D'autres caractéristiques et avantages de l'invention apparaîtront à la lecture de la description détaillée qui suit, faite à titre d'exemple non limitatif et en référence aux dessins annexés dans lesquels :
la figure 1 représente schématiquement un exemple de système de pointage selon l'invention, équipé de plusieurs paires de voies d'imagerie active et d'effecteur,
la figure 2 représente un organigramme montrant des étapes du procédé de fonctionnement du système, selon l'invention,
la figure 3 représente schématiquement un exemple de système de pointage selon l'invention, monté sur un ensemble tournant.

D'une figure à l'autre, les mêmes éléments sont repérés par les mêmes références.

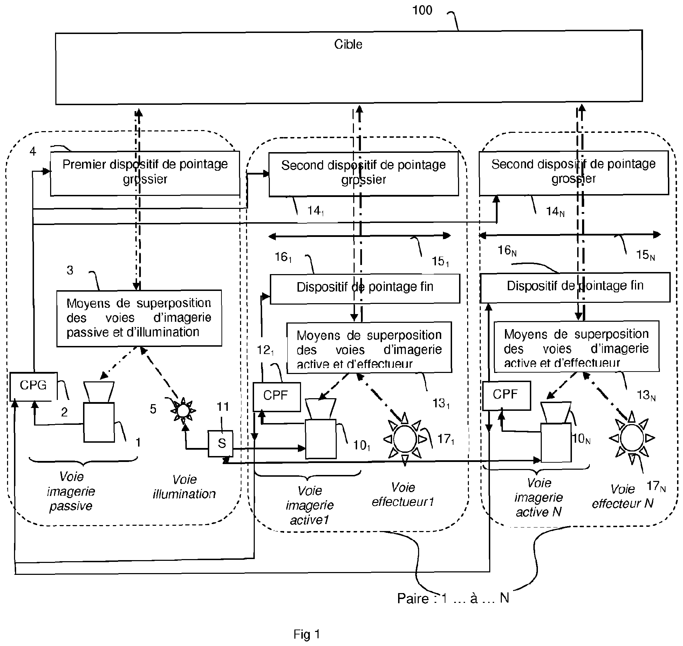

On décrit en relation avec la figure 1 un exemple de système optique de pointage laser d'une cible 100 à travers l'atmosphère selon l'invention. Il comporte quatre voies :
- une voie d'imagerie passive avec une caméra 1 auxiliaire grand champ (par exemple d'environ 3°) apte à obtenir des images de la cible 100, et un dispositif 2 de contrôle de pointage grossier relié à cette caméra, qui est équipé d'un écartomètre ;
- une voie d'illumination avec une source d'illumination impulsionnelle haute cadence 5 fonctionnant en bande proche infra-rouge (SWIR : 0.8 µm-3 µm) par exemple à une longueur d'onde assurant la sécurité oculaire (1,5µm), et ayant un champ plus petit que celui de la caméra grand champ (quelques milliradians par exemple), et des moyens de synchronisation temporelle 11 de la caméra haute cadence 10₁ (de la voie d'imagerie active décrite ci-dessous) avec la source d'illumination 5.

Ces voies d'imagerie passive et d'illumination comportent un premier dispositif optique commun 4 de pointage grossier, asservi sur les consignes élaborées par l'écartomètre à partir des images issues de la caméra auxiliaire 1.

Les deux autres voies sont :
- une voie d'effecteur avec une source laser de puissance 17₁ aussi dite voie de puissance.
- une voie d'imagerie active avec :
   ∘ une caméra 10₁ synchronisée avec la source d'illumination 5 et ayant un champ équivalent à celui de la source d'illumination ; en effet une illumination beaucoup plus grande que le champ d'imagerie est inefficace, une illumination beaucoup plus étroite que le champ d'imagerie n'assure pas une uniformité suffisante.
   ∘ des moyens d'harmonisation (non représentés) de la caméra haute cadence avec la source laser, et
   ∘ un dispositif de contrôle de pointage fin 12₁ relié à cette caméra 10₁ et qui est équipé d'un écartomètre ; le dispositif de contrôle de pointage grossier 2 est relié au dispositif de contrôle de pointage fin 12₁.

Ces deux voies d'imagerie active et d'effecteur forment une paire et comportent :
∘ un second dispositif optique commun 14₁ de pointage grossier, également asservi sur les consignes élaborées par l'écartomètre à partir des images issues de la caméra auxiliaire 1 puis sur celles de la caméra haute cadence 10₁ comme on le verra plus loin ; les premier et second dispositifs optiques de pointage grossier 4 et 14₁ sont identiques et commandés par le dispositif de contrôle de pointage grossier 2,
∘ un dispositif de pointage fin commun 12₁, asservi sur les consignes élaborées par l'écartomètre à partir des images issues de la caméra haute cadence 10₁, situé entre le second dispositif de pointage grossier 14₁ et la source laser de puissance, et commandé par le dispositif de contrôle de pointage fin 12₁,
o un dispositif optique convergent 15₁ muni de moyens de mise au point.

Pour corriger des perturbations atmosphériques de bande passante égale à la fréquence de Tyler de l'atmosphère soit de l'ordre de 100 Hz, la performance visée en précision de pointage fin est de l'ordre du microradian, et celle en bande passante de la poursuite est de l'ordre du kilohertz. On peut typiquement utiliser les éléments suivants pour obtenir ces performances.

La caméra haute cadence 10₁ fonctionne en bande proche infra-rouge (SWIR) à une cadence trame supérieure au kilohertz par exemple 2 kHz ; sa résolution est au moins de 256x256 pixels. Le dispositif de contrôle de pointage fin 12₁ ainsi que le dispositif de pointage fin 16₁ fonctionnent à des cadences adaptées à celle de la caméra haute cadence.

La source d'illumination 5 fournit un train d'impulsions de fluence en général supérieure à 10mJ, et fonctionne à la longueur d'onde 1.5µm pour des raisons de sécurité oculaire. Elle couvre un champ équivalent à celui de la caméra haute cadence 10₁, soit quelques mrad par exemple 5 mrad. Afin d'optimiser le rapport signal à bruit de la caméra à haute cadence, ce faisceau est pulsé à une cadence de répétition synchronisée avec la cadence trame de la caméra haute cadence, en utilisant par exemple une horloge de synchronisation 11. Ce faisceau est typiquement pulsé à une cadence de répétition multiple entière de la cadence trame de la caméra haute cadence (CHC).

Par exemple, la source d'illumination 5 peut comporter un laser d'éclairage fournissant une énergie de l'ordre de 250 milliJoules par impulsion dont la durée est de l'ordre de 500 nanosecondes, et être associée à une caméra haute cadence ayant une fenêtre temporelle d'ouverture de l'ordre de la durée d'impulsion de la source d'illumination avec une largeur spectrale de filtrage d'une dizaine de nanomètres. Cette architecture de source d'illumination + caméra haute cadence représente une structure adaptée pour satisfaire aux critères de portée et de dimension des objets à traiter.

Une telle source d'illumination 5 est décrite dans le brevet EP 2 283 548. Elle émet dans un domaine spectral au voisinage de 1.5 µm dans une fenêtre spectrale de longueur d'onde Δλ = ±2 nm et délivre une énergie par impulsion de 250 mJ à la cadence de 2kHz. Cette source est aussi couplée à un dispositif optique (zoom) qui ajuste le champ éclairé à la cible et à la distance d'éclairage, le champ d'observation pouvant varier de 1.5 mrad à 5 mrad.

La caméra auxiliaire 1 fonctionne par exemple en bande IR2 (3 µm - 5 µm).

Le laser de puissance 17₁ fonctionne à une puissance pouvant aller du kilowatt à plusieurs dizaines de kilowatts en proche infra-rouge (1.07µm par exemple).

Les caméras 1, 10₁, la source d'illumination 5 et la source de puissance 17₁ sont de préférence fixes.

Les dispositifs de pointage grossier 4 et 14₁ possèdent au moins deux degrés de liberté ; ce sont typiquement des têtes optiques à miroirs orientables, avec un à quatre miroirs plans, deux miroirs pour un périscope ou quatre miroirs pour un cardant optique.

Le dispositif de pointage fin 16₁ possède au moins deux degrés de liberté ; c'est typiquement un ou plusieurs miroirs placés sur des montures munies d'actuateurs piezoélectriques ou une lame de verre placée sur une monture munie d'actuateurs galvanométriques.

Ces dispositifs de pointage grossier 4 et 14₁ peuvent adresser un champ hémisphérique, soit un champ en azimuth de 360° et en élévation de -10° à +90°, avec ou sans restriction du nombre de tours. Ainsi quelle que soit la trajectoire d'un objet au-dessus de l'horizon, cet objet peut être pointé par le système de pointage selon l'invention.

Le dispositif optique convergent 15₁ est muni de moyens de mise au point qui coopèrent avec le second dispositif de pointage grossier 14₁ et le dispositif de pointage fin 16₁ pour former l'image de la cible 100 sur la caméra haute cadence 10₁ et pour pointer le laser de puissance 17₁ sur la cible 100. Il s'agit par exemple d'un miroir parabolique monté sur un triplet d'actuateurs linéaires ou d'un train de lentilles montées dans un barillet à cames.

Pour que le premier dispositif optique de pointage grossier 4 soit commun aux voies d'imagerie passive et d'illumination, on ajoute un premier dispositif de superposition 3 de ces deux voies (communs à ces deux voies) entre le premier dispositif de pointage grossier et la source laser d'illumination.

De même, pour que le second dispositif optique de pointage grossier 14₁, le dispositif de pointage fin 16₁ et le dispositif convergent 15₁ soient communs aux voies d'imagerie active et d'effecteur, on ajoute un second dispositif de superposition 13₁ de ces deux voies (communs à ces deux voies) entre le dispositif de pointage fin et la source laser de puissance. Il est avantageusement situé au plus près de la caméra haute cadence 10₁ et de la source de puissance 17₁.

Ces moyens de superposition sont typiquement :
- une lame dichroïque, ou
- un réseau de diffraction employé en réflexion, ou
- un miroir holographique tel qu'employé dans des afficheurs tête haute, ou
- un miroir percé, tel que décrit dans les brevets WO2009077361A1 et WO2009077360A1. Ce dernier dispositif permet de réaliser la séparation des voies laser de puissance et imagerie active haute cadence indépendamment des longueurs d'ondes.

Pour assurer la puissance totale nécessaire au système, tout en préservant des objectifs de coûts, de robustesse et de maintenabilité, on utilise avantageusement plusieurs sources laser de puissance. On multiplie alors les paires de voies d'imagerie active et d'effecteur, en ne gardant qu'une seule voie d'imagerie passive et une seule voie d'illumination comme montré figure 1 sur laquelle sont également représentées de 1 à N paires de voies d'imagerie active et d'effecteur avec N≥ 2.

Toutes les voies d'effecteur et d'imagerie active comportent les mêmes éléments fonctionnels, mais ces éléments peuvent être réalisés de façons différentes (par exemple en puissance, en champ, en technologie de dispositif de pointage...). Toutes les caméras haute cadence 10₁ à 10_{N} des voies d'imagerie active sont synchronisées avec une seule source d'illumination 5, celle de la voie d'illumination.

Chaque faisceau laser de puissance 17₁ (à 17_{N}) est pointé vers la cible 100 au moyen de ses propres dispositifs de pointage grossier 14₁ (à 14_{N}), de pointage fin 16₁ (à 16_{N}) et convergent 15₁ (à 15_{N}).

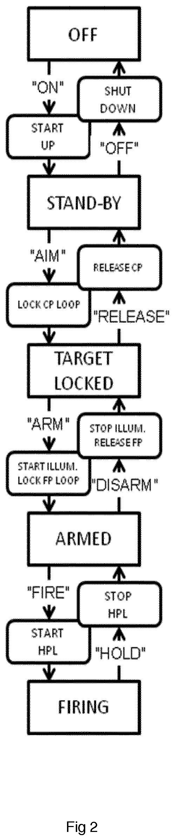

Une séquence typique de fonctionnement est décrite ci-après en relation avec l'organigramme de la figure 2 en prenant comme exemple de sytème de pointage, un système à plusieurs paires de voies d'imagerie active et d'effecteur. Sur cette figure les états du système sont représentés dans des rectangles à angles droits, les étapes du procédé dans des rectangles à angles arrondis, et les commandes sont indiquées entre guillemets français « ... ».

Dans l'état initial OFF, le système optique pointage laser n'est pas allumé ni alimenté, tous les organes mobiles tels que les dispositifs de pointage sont en configuration de stockage, tous les dispositifs de contrôles sont coupés.

L'étape START-UP consiste à alimenter le système, lancer certains tests de démarrage, placer les organes mobiles dans une configuration « stand-by » et initialiser les dispositifs de contrôles. Elle est déclenchée par la commande d'allumage du système « ON ».

Dans l'état STAND-BY, le système est en attente. Depuis cet état, un opérateur peut lancer des diagnostics automatisés, accéder au mode de configuration du système, ou bien poursuivre la séquence opérationnelle.

L'étape LOCK CP (Coarse Pointing) LOOP consiste à orienter les dispositifs de pointage grossiers 4, 14₁ à 14_{N} vers une direction prédéterminée, soit grâce à une désignation d'objectif externe (DO Radar) ou bien par l'exécution d'un motif de recherche, au moyen notamment de l'écartomètre du dispositif de contrôle grossier 2, ou encore par pointage manuel de l'opérateur. Suite à ce prépointage :
- si une cible est présente dans le champ de la caméra auxiliaire 1 et reconnue, une boucle de poursuite grossière (CP LOOP) est accrochée par le dispositif de contrôle de pointage grossier 2 et stabilisée ; le système passe en état TARGET LOCKED ;
- si aucune cible ne permet l'accrochage, le système revient en stand-by après un délai paramétré dans la configuration.

Cette étape est déclenchée par la commande « AIM », ou bien par la perte d'accrochage totale depuis un état ultérieur.

Dans l'état TARGET LOCKED, une cible 100 a été trouvée et le système l'a accrochée avec succès. Tous les dispositifs de pointage grossier 4, 14₁ (à 14_{N}) et fin 16₁ (à 16_{N}) sont asservis sur les images issues de la caméra auxiliaire 1 : tous les seconds dispositifs de pointage grossiers 14₁ (à 14_{N}) sont pointés sur la cible 100 simultanément par le dispositif de contrôle de pointage grossier 2.

L'étape START ILLUM / LOCK FP (Fine Pointing) LOOP consiste à allumer la source laser d'illumination 5 et à accrocher chaque boucle de pointage fin. Lorsque l'illumination est allumée, le dispositif de pointage fin 16₁ (à 16_{N}) de chaque paire voie de puissance et imagerie active est orienté dans son champ accessible jusqu'à ce que la cible 100 soit présente dans le champ de la caméra haute cadence 10₁ (à 10_{N}) et reconnue ; une boucle de poursuite fine est alors engagée par le dispositif de contrôle de pointage fin 12₁ (à 12_{N}) au moyen de son écartomètre et de la caméra haute cadence 10₁ (à 10_{N}) synchronisée avec la source d'illumination 5.

Dans chaque voie de puissance, le contrôle du second dispositif de pointage grossier 14₁ (à 14_{N}) est alors confié au dispositif de contrôle de pointage fin 12₁ (à 12_{N}) qui devient le maître du dispositif de contrôle de pointage grossier 2. Celui-ci ne fait dès lors qu'élaborer la commande des dispositifs de pointage grossier à partir des consignes fournies par les contrôles de pointage fin qui pilotent à la fois le pointage grossier et le pointage fin de leurs voies respectives.

Cette étape est déclenchée par la commande d'armement du système « ARM » ou par la perte de la poursuite fine.

Dans l'état ARMED, la cible est poursuivie grâce à l'imagerie active. Comme indiqué dans l'étape précédente, chaque voie de puissance est autonome pour le contrôle de son dispositif de pointage grossier 14₁ (à 14_{N}) et de son dispositif de pointage fin 16₁ (à 16_{N}). La voie d'imagerie passive et donc le premier dispositif de pointage grossier 4 restent contrôlés par le dispositif de contrôle de pointage grossier 2 afin de pointer l'illuminateur 5. En résumé dans cet état, le dispositif 2 de contrôle de pointage grossier reçoit des consignes de pointage pour chaque second dispositif de pointage grossier de la part des dispositifs de contrôle de pointage fin correspondants et élabore les commandes adéquates à destination des dispositifs de pointage grossiers correspondants ; il reçoit également toujours le flux vidéo issu de la caméra auxiliaire passive (grand champ), et élabore la commande du premier dispositif de pointage grossier grâce à son écartomètre. Le dispositif de contrôle de pointage grossier est donc toujours maître sur le premier dispositif de pointage grossier des voies illumination et imagerie passive, et esclave sur les seconds dispositifs de pointage grossier de toutes les autres voies.

C'est à cet état que revient le système en cas de défaillance de sécurité pendant le tir.

L'étape START HPL (High Power Laser) consiste à allumer chaque source laser de puissance 17₁ (à 17_{N}). Elle est déclenchée par la commande de tir du système « FIRE ».

Dans l'état FIRING, chaque source laser de puissance est allumée et pointée sur la cible 100 grâce à la caméra haute cadence 10₁ (à 10_{N}), aux dispositifs de pointage fin 16₁ (à 16_{N}) et grossier 14₁ (à 14_{N}) et au dispositif convergent 15₁ (à 15_{N}) de sa voie.

L'étape STOP HPL consiste à couper chaque source laser de puissance 17₁ (à 17_{N}). Elle est déclenchée par la commande d'arrêt de tir du système « HOLD », par l'expiration d'une minuterie de sécurité, ou par la perte de la voie auxiliaire, qui coupent simultanément toutes les sources de puissance, ou par une interruption du système de sécurité ou par une interruption de la poursuite fine qui peuvent ne couper que la voie de puissance concernée et remonter une alarme.

On retrouve l'état ARMED tel que décrit précédemment, dans lequel la source d'illumination est allumée et le contrôle de pointage de chaque paire 1 à N est assuré par son dispositif de contrôle de pointage fin 12₁ (à 12_{N}) respectivement et le contrôle de pointage de la paire 0 est assuré par le dispositif de contrôle de pointage grossier 2

En cas de défaillance de sécurité pendant le tir, le système revient à cet état ARMED.

L'étape STOP ILLUM./ RELEASE FP consiste, dans cet ordre, à rendre le contrôle des dispositifs de pointage grossier 4, 14₁ (à 14_{N}) au contrôle de pointage grossier 2, désengager les boucles de pointage fin et couper l'illuminateur.

Elle est déclenchée par la commande de désarmement du système « DISARM », et l'on retrouve alors l'état TARGET LOCKED décrit précédemment.

L'étape RELEASE CP LOOP consiste à relâcher la poursuite grossière afin de revenir à l'état STANDBY. Les dispositifs de pointage grossier 4, 14₁ (à 14_{N}) sont placés en configuration standby.

Elle est déclenchée par la commande « RELEASE ».

L'étape SHUT DOWN consiste à couper l'alimentation du système, lancer certains tests de coupure, placer les organes mobiles dans une configuration de rangement.

Elle est déclenchée par la commande d'arrêt du système « OFF ».

Pour assurer la combinaison des faisceaux sur la cible (notamment des faisceaux de puissance), une supervision gère la géométrie du système par rapport à sa cible afin de fournir à chaque voie des éléments de correction pour que chaque voie vise le même point de la cible ou pour qu'au contraire, différentes paires de voies d'imagerie active et de puissance visent différents points (différents impacts) de la même cible.

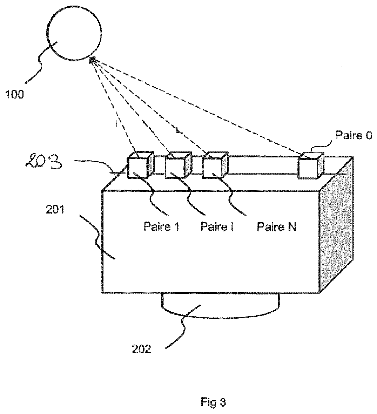

Afin de réduire les masquages éventuels entre les différents dispositifs de pointage, masquages d'autant plus importants que le nombre N de paires de voies est grand, l'ensemble des voies est intégré à un même bâti 201 montré figure 3 : il s'agit typiquement d'un conteneur standard, éventuellement modifié. Il peut être mis en rotation autour d'un axe vertical au moyen d'un dispositif 202 de rotation du bâti selon un ou plusieurs de ses axes, permettant par exemple un débattement de -90° à +90° par rapport à l'axe neutre du système. Ce dispositif de rotation 202 peut être une table tournante ou une rotule équipée de vérins de façon à basculer le bâti. De plus cet ensemble de voies est placé dans une configuration minimisant les risques de masquages étant donnée l'évolution de la cible 100 relativement au système : les dispositifs de pointage sont avantageusement disposés sur la grande ligne médiane 203 du toit du conteneur. La table tournante 202 et le motif d'implantation des dispositifs de pointage permettent de rendre le système opérationnel dans n'importe quelle direction dans l'hémisphère accessible. De la sorte, un opérateur peut configurer le système dans la position où les masquages seront supprimés dans la direction d'intérêt (direction de la cible).

Bien que l'invention ait été décrite en liaison avec des modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système optique de pointage laser d'une cible (100) à travers l'atmosphère qui comporte quatre voies optiques :
- une voie d'imagerie passive avec une caméra auxiliaire (1) apte à obtenir des images de la cible, et un dispositif (2) de contrôle de pointage grossier relié à cette caméra,
- une voie d'illumination avec une source d'illumination impulsionnelle (5) et des moyens de synchronisation temporelle (11), les voies d'imagerie passive et d'illumination comportant un premier dispositif optique commun de pointage grossier (4) *relié au dispositif (2) de contrôle de pointage grossier,*
- une voie d'effecteur avec une source laser de puissance (17₁),
- une voie d'imagerie active avec :
∘ une caméra haute cadence (10₁) synchronisée avec la source d'illumination impulsionnelle (5) par les moyens de synchronisation temporelle (11),
∘ des moyens d'harmonisation de la caméra haute cadence (10₁) avec la source laser de puissance (17₁), et
∘ un dispositif (12₁) de contrôle de pointage fin relié à cette caméra haute cadence (10₁)
**caractérisé en ce que** les voies d'imagerie active et d'effecteur forment une paire (*paire 1*) et comportent
- un second dispositif optique commun (14₁) de pointage grossier relié au dispositif de contrôle de pointage grossier (2),
- un dispositif optique commun de pointage fin (16₁), commandé par le dispositif de contrôle de pointage fin (12₁),
- un dispositif optique convergent (15₁) muni de moyens de mise au point,
et **en ce que** le dispositif de contrôle de pointage grossier (2) est relié au dispositif de contrôle de pointage fin (12₁).

2. Système optique de poursuite d'une cible selon la revendication précédente, **caractérisé en ce que** le dispositif optique convergent (15₁) est situé entre le dispositif optique commun de pointage fin (16₁) et le second dispositif optique de pointage grossier (14₁).

3. Système optique de poursuite d'une cible selon l'une des revendications précédentes, **caractérisé en ce qu'**il comprend un premier dispositif de superposition (3) des voies d'imagerie passive et d'illumination situés entre le premier dispositif optique de pointage grossier (4) et la source laser d'illumination (5).

4. Système optique de poursuite d'une cible selon l'une des revendications précédentes, **caractérisé en ce qu'**il comprend un second dispositif de superposition (13₁) des voies d'imagerie active et de puissance situés entre le dispositif de pointage fin (16₁) et la source laser de puissance (17₁).

5. Système optique de poursuite d'une cible selon l'une des revendications précédentes, **caractérisé en ce qu'**il comprend d'autres paires de voies d'imagerie active et d'effecteur (paires 1 à N) disposées en parallèle et **en ce que** le dispositif de contrôle de pointage grossier (2) est relié au dispositif de contrôle de pointage fin (12₁, ..., 12_{N}) de chaque voie d'imagerie active.

6. Système optique de poursuite d'une cible selon la revendication précédente, **caractérisé en ce que** les paires de voies d'imagerie active et d'effecteur sont montées sur un bâti (201) selon une configuration prédéterminée, et **en ce que** le bâti est lui-même monté sur un dispositif (202) de rotation du bâti.

7. Système optique de poursuite d'une cible selon la revendication précédente, **caractérisé en ce que** la configuration est rectiligne.

8. Procédé de poursuite d'une cible (100) à travers l'atmosphère au moyen d'un système optique de pointage laser d'une cible selon l'une des revendications précédentes, **caractérisé en ce qu'**il comporte les étapes suivantes :
- orienter le premier et chaque second dispositif de pointage grossier dans une direction prédéterminée ;
- lorsqu'une cible est présente dans le champ de la caméra auxiliaire, accrocher et stabiliser une boucle de poursuite grossière ;
- une cible ayant été trouvée et poursuivie, le contrôle du premier dispositif de pointage grossier et de chaque second dispositif de pointage grossier est confié au dispositif de contrôle de pointage grossier ;
- allumer la source laser d'illumination ;
- lorsque l'illumination est allumée, chaque caméra haute cadence fournit un flux vidéo au dispositif de contrôle de pointage fin associé permettant d'accrocher et stabiliser chaque boucle de poursuite fine ;
- chaque second dispositif de pointage grossier est alors piloté par le dispositif de contrôle de pointage fin de sa paire, qui dès lors pilote à la fois le second dispositif de pointage grossier et le dispositif de pointage fin,
- lorsque chaque second dispositif de pointage grossier est asservi par le dispositif de contrôle de pointage fin de la paire considérée, le dispositif de contrôle de pointage grossier ne contrôle plus que le premier dispositif de pointage grossier,
- sur commande de tir du système, allumer les lasers de puissance et poursuivre la cible grâce à l'imagerie active fournie par les caméras haute cadence et par les dispositifs de pointage fin et grossier afin que chaque source laser de puissance soit pointée.

9. Procédé selon la revendication précédente, **caractérisé en ce que** la direction de pointage grossier est déterminée par une désignation d'objectif externe ou par l'exécution d'un motif de recherche, ou par pointage manuel de l'opérateur.

## Patentansprüche

1. Optisches System zum Laserzeigen eines Ziels (100) durch die Atmosphäre, **dadurch gekennzeichnet, dass** es vier optische Kanäle beinhaltet:
- einen passiven Bildgebungskanal mit einer Hilfskamera (1), welche in der Lage ist, Bilder des Ziels aufzunehmen, und eine mit dieser Kamera verbundene Vorrichtung (2) zur Kontrolle des Grobzeigens,
- einen Beleuchtungskanal mit einer Impulsbeleuchtungsquelle (5) und mit Mitteln zur zeitlichen Synchronisierung (11),
wobei die Kanäle für passive Bildgebung und Beleuchtung eine erste gemeinsame optische Vorrichtung zum Grobzeigen (4) beinhalten, *welche mit der Vorrichtung (2) zur Kontrolle des Grobzeigens verbunden ist,*
- einen Effektorkanal mit einer Leistungslaserquelle (17₁),
- einen aktiven Bildgebungskanal mit:
∘ eine Kamera mit hoher Bildfrequenz (10₁), synchronisiert mit der Impulsbeleuchtungsquelle (5) durch die Mittel zur zeitlichen Synchronisation (11),
∘ Mittel zum Harmonisieren der Kamera mit hoher Bildfrequenz (10₁) mit der Leistungslaserquelle (17₁), und
∘ eine Vorrichtung (12₁) zur Kontrolle des Feinzeigens, welche mit der Kamera mit hoher Bildfrequenz (10₁) verbunden ist
**dadurch gekennzeichnet, dass** der Kanal für aktive Bildgebung und der Effektorkanal ein Paar (*Paar 1*) bilden und Folgendes beinhalten:
- eine zweite gemeinsame optische Vorrichtung (14₁) zum Grobzeigen, welche mit der Vorrichtung (2) zur Kontrolle des Grobzeigens verbunden ist,
- eine gemeinsame optische Vorrichtung zum Feinzeigen (16₁), welche durch die Vorrichtung zur Kontrolle des Feinzeigens (12₁) gesteuert wird,
- eine konvergierende optische Vorrichtung (15₁) mit Fokussierungsmitteln, und dadurch, dass die Vorrichtung zur Kontrolle des Grobzeigens (2) mit der Vorrichtung zur Kontrolle des Feinzeigens (12₁) verbunden ist.

2. Optisches System zur Verfolgung eines Ziels nach dem vorherigen Anspruch, **dadurch gekennzeichnet, dass** die konvergierende optische Vorrichtung (15₁) sich zwischen der gemeinsamen optischen Vorrichtung zum Feinzeigen (16₁) und der zweiten optischen Vorrichtung zum Grobzeigen (14₁) befindet.

3. Optisches System zur Verfolgung eines Ziels nach einem der vorhergehenden Ansprüche, **dadurch gekennzeichnet, dass** es eine erste Vorrichtung zur Überlagerung (3) der Kanäle für passive Bildgebung und Beleuchtung beinhaltet, welche sich zwischen der ersten optischen Vorrichtung zum Grobzeigen (4) und der Beleuchtungslaserquelle (5) befinden.

4. Optisches System zur Verfolgung eines Ziels nach einem der vorhergehenden Ansprüche, **dadurch gekennzeichnet, dass** es eine zweite Vorrichtung zur Überlagerung (13₁) der Kanäle für aktive Bildgebung und Leistung beinhaltet, welche sich zwischen der Vorrichtung zum Feinzeigen (16₁) und der Leistungslaserquelle (17₁) befinden.

5. Optisches System zur Verfolgung eines Ziels nach einem der vorhergehenden Ansprüche, **dadurch gekennzeichnet, dass** es andere Paare von Kanälen für aktive Bildgebung und von Effektorkanälen (Paare 1 bis N) beinhaltet, welche parallel angeordnet sind, und dadurch, dass die Vorrichtung zur Kontrolle des Grobzeigens (2) mit der Vorrichtung zur Kontrolle des Feinzeigens (12₁, ..., 12_{N}) eines jeden Kanals für aktive Bildgebung verbunden ist.

6. Optisches System zur Verfolgung eines Ziels nach dem vorhergehenden Anspruch, **dadurch gekennzeichnet, dass** die Paare von Kanälen für aktive Bildgebung und von Effektorkanälen auf einem Gestell (201) gemäß einer vorbestimmten Konfiguration montiert sind, und dadurch, dass das Gestell seinerseits auf einer Drehvorrichtung (202) für das Gestell montiert ist.

7. Optisches System zur Verfolgung eines Ziels nach dem vorhergehenden Anspruch, **dadurch gekennzeichnet, dass** die Konfiguration geradlinig ist.

8. Verfahren zur Verfolgung eines Ziels (100) durch die Atmosphäre mithilfe eines optischen Systems zum Laserzeigen eines Ziels nach einem der vorhergehenden Ansprüche, **dadurch gekennzeichnet, dass** es folgende Schritte beinhaltet:
- Ausrichten der ersten und einer jeden zweiten Vorrichtung zum Grobzeigen in eine vorbestimmte Richtung;
- wenn ein Ziel im Feld der Hilfskamera vorhanden ist, Erfassen und Stabilisieren einer Grob-Verfolgungsschleife;
- wenn ein Ziel gefunden wurde und verfolgt wird, wird die Kontrolle der ersten Vorrichtung zum Grobzeigen und einer jeden zweiten Vorrichtung zum Grobzeigen der Vorrichtung zur Kontrolle des Grobzeigens anvertraut;
- Einschalten der Beleuchtungslaserquelle;
- wenn die Beleuchtung eingeschaltet ist, liefert jede Kamera mit hoher Bildfrequenz einen Videostrom an die zugeordnete Vorrichtung zur Kontrolle des Feinzeigens, welcher es ermöglicht, jede Feinverfolgungsschleife zu erfassen und zu stabilisieren;
- jede zweite Vorrichtung zum Grobzeigen wird dann durch die Vorrichtung zur Kontrolle des Feinzeigens ihres Paares gesteuert, welches fortan gleichermaßen die zweite Vorrichtung zum Grobzeigen und die Vorrichtung zum Feinzeigen steuert,
- wenn jede zweite Vorrichtung zum Grobzeigen durch die Vorrichtung zur Kontrolle des Feinzeigens des betrachteten Paars geregelt wird, kontrolliert die Vorrichtung zur Kontrolle des Grobzeigens nur noch die erste Vorrichtung zum Grobzeigen,
- bei Schussbefehl des Systems, Einschalten des Leistungslasers und Verfolgen des Ziels dank der aktiven Bildgebung, welche durch die Kameras mit hoher Bildfrequenz und die Vorrichtungen zum Feinzeigen und zum Grobzeigen geliefert wird, damit jede Leistungslaserquelle gezeigt wird.

9. Verfahren nach dem vorhergehenden Anspruch, **dadurch gekennzeichnet, dass** die Grobzeigensrichtung durch eine Bezeichnung eines externen Ziels oder durch die Ausführung eines Suchmotivs oder durch manuelles Zeigen von dem Bediener bestimmt wird.

## Claims

1. An optical system for laser-pointing a target (100) through the atmosphere, **characterized in that** it includes four optical channels:
- a passive imaging channel with an auxiliary camera (1) capable of obtaining images of the target, and a coarse pointing control device (2) linked to this camera;
- an illumination channel with a pulsed illumination source (5) and temporal synchronization means (11);
the passive imaging and illumination channels including a first common optical coarse pointing device (4) *linked to the coarse pointing control device (2);*
- an effector channel with a high-power laser source (17₁);
- an active imaging channel with:
∘ a high-speed camera (10₁) synchronized with the pulsed illumination source (5) by the temporal synchronization means (11);
∘ means for harmonizing the high-speed camera (10₁) with the high-power laser source (17₁); and
∘ a fine pointing control device (12₁) linked to this high-speed camera (10₁),
**characterized in that** the active imaging and effector channels form a pair *(pair 1)* and include
- a second common optical coarse pointing device (14₁) linked to the coarse pointing control device (2);
- a common optical fine pointing device (16₁), controlled by the fine pointing control device (12₁);
- a convergent optical device (15₁) provided with focusing means, and **in that** the coarse pointing control device (2) is linked to the fine pointing control device (12₁).

2. The optical system for tracking a target as claimed in the preceding claim, **characterized in that** the convergent optical device (15₁) is located between the common optical fine pointing device (16₁) and the second optical coarse pointing device (14₁).

3. The optical system for tracking a target as claimed in one of the preceding claims, **characterized in that** it comprises a first device (3) for superposing the passive imaging and illumination channels that are located between the first optical coarse pointing device (4) and the laser illumination source (5).

4. The optical system for tracking a target as claimed in one of the preceding claims, **characterized in that** it comprises a second device (13₁) for superposing the active imaging and high-power channels that are located between the fine pointing device (16₁) and the high-power laser source (17₁).

5. The optical system for tracking a target as claimed in one of the preceding claims, **characterized in that** it comprises other pairs of active imaging and effector channels (pairs 1 to N) that are arranged in parallel and **in that** the coarse pointing control device (2) is linked to the fine pointing control device (12₁, ..., 12_{N}) of each active imaging channel.

6. The optical system for tracking a target as claimed in the preceding claim, **characterized in that** the pairs of active imaging and effector channels are mounted on a structure (201) according to a predetermined configuration, and **in that** the structure is itself mounted on a device (202) for rotating the structure.

7. The optical system for tracking a target as claimed in the preceding claim, **characterized in that** the configuration is rectilinear.

8. A method for tracking a target (100) through the atmosphere by means of an optical system for laser-pointing a target as claimed in one of the preceding claims, **characterized in that** it includes the following steps:
- orienting the first and each second coarse pointing device in a predetermined direction;
- when a target is present in the field of the auxiliary camera, locking and stabilizing a coarse tracking loop;
- once a target has been located and is being tracked, control of the first coarse pointing device and of each second coarse pointing device is assumed by the coarse pointing control device;
- activating the laser illumination source;
- once the illumination has been activated, each high-speed camera delivers a video stream to the associated fine pointing control device allowing each fine tracking loop to be locked and stabilized;
- each second coarse pointing device is then driven by the fine pointing control device of its pair, which subsequently drives both the second coarse pointing device and the fine pointing device;
- once each second coarse pointing device is slaved to the fine pointing control device of the pair under consideration, the coarse pointing control device controls only the first coarse pointing device;
- under a fire instruction of the system, activating the high-power lasers and tracking the target by virtue of the active imaging provided by the high-speed cameras and by the fine and coarse pointing devices so that each high-power laser source is pointed.

9. The method as claimed in the preceding claim, **characterized in that** the coarse pointing direction is determined by an external target designation or by executing a search pattern, or by manual pointing by the operator.
